# EUROPEAN PATENT SPECIFICATION

(11) **EP 4 446 746 B1**
(45) Date of publication and mention of the grant of the patent: **19.08.2026**
(21) Application number: 22903831.0
(22) Date of filing: 28.09.2022
(51) Int. Cl.: G01N 35/02, G01N 35/00, G01N 35/04

(54) **SAMPLE CONVEYANCE DEVICE AND SAMPLE CONVEYANCE METHOD**
PROBENFÖRDERVORRICHTUNG UND PROBENFÖRDERVERFAHREN
DISPOSITIF DE TRANSPORT D'ÉCHANTILLON ET PROCÉDÉ DE TRANSPORT D'ÉCHANTILLON

(30) Priority: 08.12.2021 JP 2021199145
(43) Date of publication of application: 16.10.2024
(73) Proprietor: HITACHI HIGH-TECH CORPORATION, Tokyo 105-6409 (JP)
(72) Inventor: OKUBO, Takaichi, Tokyo 105-6409 (JP); ONIZAWA, Kuniaki, Tokyo 105-6409 (JP); YANO, Shigeru, Tokyo 105-6409 (JP)
(74) Representative: Strehl & Partner mbB
(86) International application number: PCT/JP2022/036169
(87) International publication number: WO 2023/105897

(56) References cited:
- EP-A1- 3 889 615
- WO-A1-2016/158122
- JP-A- 2015 141 024
- JP-A- 2020 526 841
- JP-A- 2021 043 195
- JP-A- 2021 162 601
- JP-A- H1 038 893

## Description

### Technical Field

The present invention relates to a sample conveyance device and a sample conveyance method.

### Background Art

For the purpose of reducing the cost and shortening the time by eliminating the need for a direction control unit for a sample carrier, PTL 1 discloses that, by providing a high-friction member on a bottom surface of the sample carrier, a center of a frictional force between a conveyance surface and the bottom surface is offset to a position away from a rotation center of a bottom portion of the sample carrier.

### Citation List

### Patent Literature

PTL 1: JP2020-112459A

### Summary of Invention

### Technical Problem

In recent years, automation has been advanced in sample tests for the purpose of diagnosis in the medical field. For example, a sample pretreatment system and a sample analysis system are connected by a sample conveyance device, and full automation of processes related to sample tests is advanced.

In the sample conveyance device, a holder on which one container containing a sample can be mounted is used. As a method of conveying the holder, a method of conveying the holder by a conveyance unit implemented by a belt conveyor or the like is generally adopted.

In the sample analysis system for clinical tests, an analysis item is specified for each sample, and a test is performed based on the item. Similarly, in the sample pretreatment system, a treatment item is specified for each sample type, and a pretreatment of the sample is performed based on the item.

At this time, in order to identify sample information, it is general to assign a sample identifier such as a bar code to each container. In the sample conveyance device, the sample is conveyed to a required place of the sample analysis system or the sample pretreatment system based on the information read from the sample identifier.

In recent years, the number of tests is expected to increase due to an increase in test items and the aging of the population, and thus an improvement in sample analysis processing capability is required. In order to improve the analysis processing capability of the sample analysis system, it is desired to improve the conveyance processing capability of conveying a plurality of samples in the sample conveyance device. Further, with the improvement in the conveyance processing capability, it is also required to improve the processing capability in reading the sample identifier.

In PTL 1, an information reading unit for reading a sample identifier is disposed in a lateral direction of the conveyance unit to read the sample identifier.

However, in PTL 1, the information reading unit is disposed in the lateral direction of the conveyance unit, and thus, in the case of the conveyance unit including a plurality of conveyance lanes, there is a possibility that a holder conveyed in a front conveyance lane covers a holder conveyed in a back conveyance lane, and a sample identifier of the sample on the back side cannot be read. There is room for improvement in reading accuracy. In contrast, it is conceivable to prepare the same number of information reading units as the number of conveyance lanes. However, this leads to an increase in cost, and thus there may be room for reduction in device cost.

EP 3 889 615 A1 likewise discloses a sample handling system and a method for handling a plurality of samples.

An object of the invention is to provide a sample conveyance device and a sample conveyance method capable of improving the accuracy of reading sample information as compared with the related art.

### Solution to Problem

The invention includes a plurality of aspects for solving the above problems, and one example thereof is a sample conveyance device including: a holder configured to hold a container to which a sample identifier is attached; a conveyance unit including a plurality of conveyance lanes disposed in parallel and configured to convey the holder; and an information reading unit disposed in at least one location of a front side of the holder in a conveyance direction, an opposite side of the holder in the conveyance direction, and an upper side of the conveyance lane, and configured to read the sample identifier of the container present in a reading range set in the conveyance unit, in which the information reading unit with a quantity of one reads the sample identifier of the container conveyed in any one of the plurality of conveyance lanes.

### Advantageous Effects of Invention

According to the invention, the accuracy of reading sample information can be improved as compared with the related art. Problems, configurations, and effects other than those described above will become apparent in the following description of embodiments.

### Brief Description of Drawings

[FIG. 1] FIG. 1 is a diagram showing a configuration example of a sample testing automation system in which a sample conveyance device according to Embodiment 1 of the invention is adopted.
[FIG. 2] FIG. 2 is a plan view showing a configuration of the sample conveyance device according to Embodiment 1.
[FIG. 3] FIG. 3 is a plan view showing a reading prevention unit implemented by an opening and closing door of the sample conveyance device according to Embodiment 1.
[FIG. 3A] FIG. 3A is a schematic view showing the opening and closing door of the sample conveyance device according to Embodiment 1.
[FIG. 4] FIG. 4 is a diagram illustrating determination of a lane in the sample conveyance device according to Embodiment 1 based on an image captured by an information reading unit.
[FIG. 5] FIG. 5 is a flowchart showing a flow from determination of a conveyance path to movement to be out of a reading range when reading a sample identifier in order to associate a container of the sample conveyance device according to Embodiment 1 with the sample identifier.
[FIG. 6] FIG. 6 is a plan view showing a reading prevention unit using a wall of a sample conveyance device according to Embodiment 2 of the invention.
[FIG. 7] FIG. 7 is a plan view showing a reading prevention unit using a rotation door of the sample conveyance device according to Embodiment **2.**
[FIG. 8] FIG. 8 is a side view showing a reading prevention unit using a light source of the sample conveyance device according to Embodiment **2.**
[FIG. 9] FIG. 9 is a flowchart showing a flow from determination of a conveyance path to movement to be out of a reading range when reading a sample identifier for the purpose of improving processing capability of a sample conveyance device according to Embodiment 3 of the invention.

### Description of Embodiments

Hereinafter, embodiments of a sample conveyance device and a sample conveyance method of the invention will be described with reference to the drawings. In the drawings used in the specification, the same or corresponding components are denoted by the same or similar reference numerals, and repeated descriptions of the components may be omitted.

### <Embodiment 1>

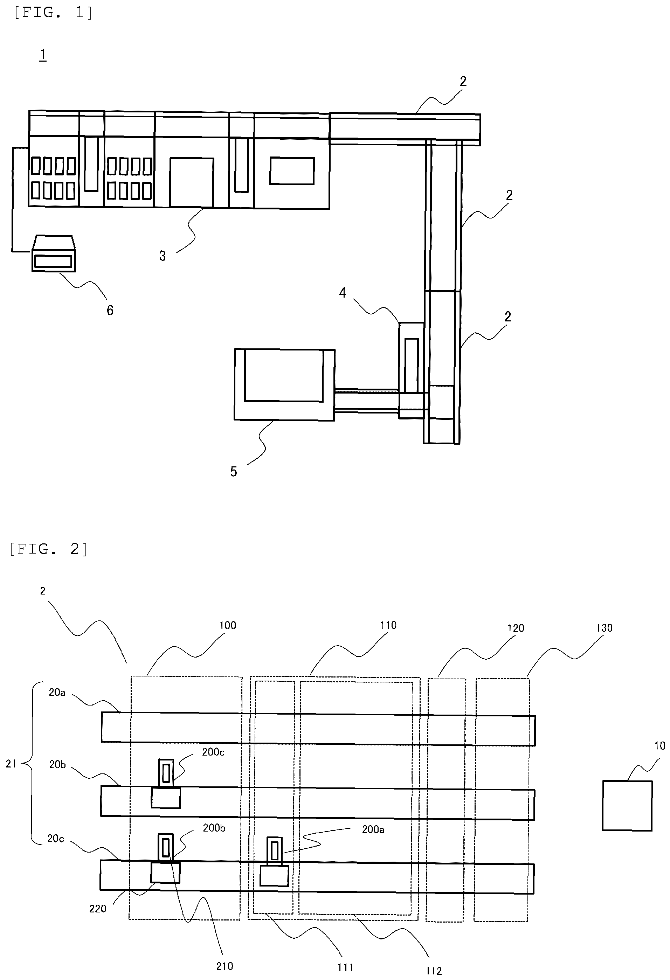

A sample conveyance device and a sample conveyance method according to Embodiment 1 of the invention will be described with reference to FIGS. 1 to **5****.**

First, an overall configuration of a sample testing automation system will be described with reference to FIG. **1.** FIG. 1 is a plan view showing an overall configuration of the sample testing automation system including a sample conveyance device according to the present embodiment.

A sample testing automation system 1 of the present embodiment shown in FIG. 1 is a system including an analysis device for automatically analyzing components in a sample such as blood and urine.

Main elements of the sample testing automation system 1 are a plurality of sample conveyance devices 2 that convey, to a predetermined destination, a holder 220 (see FIG. 2) on which a container 200 (see FIG. 2 and the like) accommodating a sample is mounted or an empty holder 220 on which a container 200 is not mounted, a sample pretreatment system 3, an analysis system connection device 4, a sample analysis system 5, and a system control unit 6 that integrally manages the sample testing automation system 1.

In the sample testing automation system 1, the sample is handled in a state of being accommodated in the container 200 held by the holder 220 as shown in FIG. 2. The holder 220 is conveyed by the sample conveyance device 2 in the sample testing automation system 1, and various processes are performed by the sample pretreatment system 3 and the sample analysis system 5.

The sample pretreatment system 3 is a place where a pretreatment of a sample is performed before analysis. In the sample pretreatment system 3, a sample pretreatment step such as storage of a sample, reception treatment of a sample, centrifugation treatment, acquisition of information such as a liquid amount of a sample, opening treatment of a sample container, aliquoting treatment of dividing a sample into a plurality of containers is performed.

The sample analysis system 5 is a unit that performs qualitative and quantitative analysis on components in the sample conveyed by the sample conveyance device 2. The analysis items in the unit are not particularly limited, and a configuration of a known automatic analyzer for analyzing biochemical items and immune items can be adopted. Further, when a plurality of sample analysis systems are provided, the specifications may be the same as or different from each other, and are not particularly limited.

The analysis system connection device 4 is disposed between the sample conveyance device 2 and the sample analysis system 5. The sample conveyed from the sample conveyance device 2 toward the sample analysis system 5 is conveyed to the sample analysis system 5 through the analysis system connection device 4, so that the sample waiting for analysis is prevented from lining up on the sample conveyance device 2 and causing congestion.

The sample conveyance device 2 is a conveyance line unit that conveys the holder 220 on which the container 200 is placed inside or between the sample pretreatment system 3 and the sample analysis system 5. The conveyance method of the sample conveyance device 2 includes a method using a belt conveyor, a self-traveling type in which a motor and a tire are provided in the holder 220 (see FIG. 2), and a method using an electromagnetic attraction force generated between the conveyance surface and the holder.

The system control unit 6 controls operations of the entire system including the sample conveyance device 2 and the sample analysis system 5, and is implemented by a computer including a display device such as a liquid crystal display, an input device, a storage device, a CPU, a memory, and the like.

In the present embodiment, the system control unit 6 controls the conveyance of the holder 220 and operations of the information reading unit 10, and executes control of conveying, after a container 200 as a reading target is conveyed from a reading range 110, the next container 200 to the reading range 110. Details thereof will be described below.

In the sample testing automation system 1, pretreatment items and analysis items required for each sample are determined and registered in the system control unit 6. A sample identifier 210 attached to the container 200 includes sample information. The information reading unit 10 (see FIG. 2) for reading the sample identifier 210 is provided in the sample conveyance device, and the sample information read by the information reading unit 10 is transmitted to the system control unit 6. Upon receiving an instruction of the pretreatment and the analysis items from the system control unit 6, the sample conveyance device 2 conveys the sample to each device.

The control of an operation of each device is executed by the system control unit 6 based on various programs recorded in the storage device. The operation control processes to be executed by the system control unit 6 may be integrated in one program, or may be performed by respective programs or a combination thereof. A part or all of the program may be implemented by dedicated hardware or may be modularized.

In FIG. 1, a case where one sample analysis system 5 is provided is illustrated, and the number of sample analysis systems 5 is not particularly limited and may be two or more. Similarly, the number of sample conveyance devices 2 is not particularly limited and may be one or more.

Next, a configuration of the sample conveyance device 2 of the present embodiment will be described with reference to FIGS. 2 to **5****.** FIG. 2 is an illustration view showing a schematic configuration of the sample conveyance device 2 of the present embodiment.

The sample conveyance device 2 of the present embodiment shown in FIG. 2 includes a container 200 to which a sample identifier 210 is attached, a holder 220 that holds the container 200, a conveyance unit 21 including a plurality of conveyance lanes 20a, 20b, and 20c disposed in parallel to convey the holder 220, and one information reading unit 10.

In the sample conveyance device 2 shown in FIG. 2, the information reading unit 10 that reads the sample identifier 210 of the container 200 present in the reading range 110 set in the conveyance unit 21 is provided downstream side in a conveyance direction. Regarding the information reading unit 10 in the present embodiment, one information reading unit 10 reads the sample identifier 210 of the container 200 conveyed in any one of the plurality of conveyance lanes 20, 20a, 20b, and 20c.

When an information reading unit is disposed in a manner of reading the sample identifier from a lateral side in the conveyance direction as in the related art, a container or a holder in a front conveyance lane may hinder the reading of a sample identifier of a container in a back conveyance lane.

In contrast, when an information reading unit is provided in each conveyance lane, the same number of information reading units as the conveyance lanes are required, which leads to an increase in device cost.

In the present embodiment, by providing the information reading unit 10 in the conveyance direction of the container 200, the sample identifier 210 of the container 200 conveyed by the conveyance unit 21 including the plurality of conveyance lanes 20 can be read by one information reading unit 10. Accordingly, the device cost can be reduced.

Next, a reading standby range 100, the reading range 110, a reading start position 111, a reading conveyance range 112, a reading end position 120, and a conveyance range 130 shown in FIG. 2 will be described. The ranges and positions do not need to be set in a manner of being actually visible, and can be positions set for convenience in the system control unit 6.

The reading standby range 100 indicates a range in which a standby position of the container 200 read by the information reading unit 10 from the reading standby range 100 is set.

The reading range 110 indicates a range required for the information reading unit 10 to read the sample identifier 210. As an example, a case where a bar code is attached as the sample identifier 210 to a side surface of the container 200, and an image recognition bar code reader is provided as the information reading unit 10 will be described. The sample identifier 210 is not limited to a bar code, and may have various forms such as an RFID tag.

Here, a strict insertion direction for reading the sample identifier 210 is not required for the container 200 mounted on the holder 220. In addition, it is assumed that the sample identifier 210 is not attached over an entire circumference of the container 200.

Therefore, in the sample conveyance device 2, in order to read the sample identifiers 210 in all directions conveyed before the information reading unit 10 that recognizes the sample identifiers 210, it is desirable to rotate the holder 220 within a field of view.

For the purpose of improving the processing capability, in order to rotate the holder 220 while conveying the holder 220, a rotation mechanism (omitted for illustration purposes) is provided in each of the conveyance lanes 20a, 20b, and 20c. Regarding the rotation mechanism, for example, a motor can be used in the reading range 110 in order to cause the sample identifier 210 and the information reading unit 10 to directly face each other for the purpose of reading the sample identifier 210. The rotation mechanism comes into contact with a side surface of the holder 220, and rotates and conveys the holder 220 using a frictional force. At this time, a conveyance range in which a sufficient rotation amount at which the sample identifier 210 can be read by the information reading unit 10 is obtained is set as the reading range 110. Here, the reading range 110 is within the field of view of the information reading unit 10. When the holder 220 is conveyed in any direction by the rotation mechanism, the sample identifier 210 and the information reading unit 10 directly face each other, and the sample identifier 210 can also be read regardless of the direction of the holder 220 during conveyance.

The reading start position 111 indicates a start point of the reading range 110, and the reading conveyance range 112 indicates a range, in which the holder is conveyed, in the reading range 110. The reading end position 120 indicates a position where the holder 220 stops after passing through the reading range 110.

The conveyance range 130 indicates a movement region for conveying the holder 220 after reading the sample identifier 210 to the sample pretreatment system 3 or the sample analysis system 5.

A sensor (not shown) for detecting the presence of the container 200 is preferably provided within or between the reading standby range 100, the reading range 110, the reading start position 111, the reading conveyance range 112, the reading end position 120, and the conveyance range 130.

Here, in a case where the range in which the information reading unit 10 can read the sample identifier 210 is wider than the reading range 110, and a sample identifier 210 in the reading standby range 100 is also read, there are some cases that lead to the sample mix-up. In order to prevent the sample mix-up, it is required to retract the reading standby range 100 to a position where the information reading unit 10 cannot read the sample identifier 210.

However, a distance between the reading standby range 100 and the reading range 110 is increased, and a movement time required for reading the sample identifier 210 is increased. Therefore, reading processing capacity is decreased. In order to solve the problem, it is desirable to further provide a reading prevention unit that prevents the reading of the sample identifier 210 of a container 200 as a next reading target by the information reading unit 10.

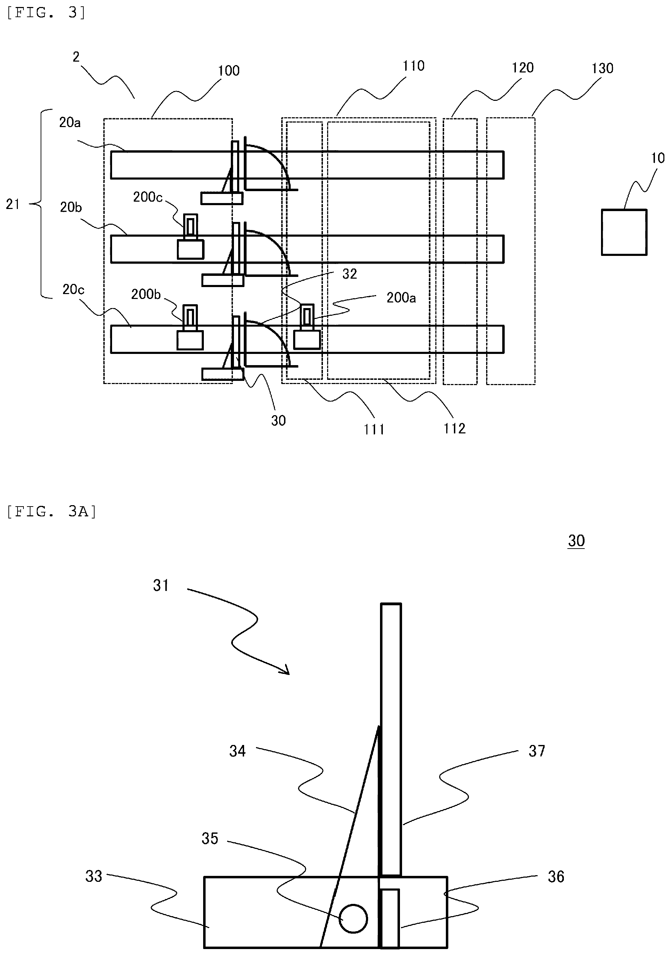

FIG. 3 shows, as an example of the reading prevention unit, an opening and closing door 30 using a claw feeding mechanism 31 located at a boundary between the reading range 110 and the reading standby range. FIG. 3A is a schematic view of the opening and closing door 30 using the claw feeding mechanism 31.

As shown in FIGS. 3 and 3A, the claw feeding mechanism 31 includes a base 33, a claw 34 attached to the base 33, and a spring-wound rotation shaft 35, and a stopper 36. By providing a wall 37 on the claw 34 portion of the claw feeding mechanism 31, the opening and closing door 30 is opened and closed with the rotation of the claw 34 portion.

The claw feeding mechanism 31 is rotated by coming into contact with the holder 220. With the rotation, the opening and closing door 30 is opened, and the holder 220 passes. After the holder 220 passes, the spring-wound rotation shaft 35 is rotated to return to an original position by an elastic force of the spring, and is stopped by the stopper **36.** The distance between the reading standby range 100 and the reading start position 111 is shortened by the reading prevention unit, and therefore, the conveyance time of the container 200 is shortened, which contributes to an improvement in the processing capability.

When sample identifiers 210 of containers 200 conveyed to the plurality of conveyance lanes 20 are read by one information reading unit 10 as in the present embodiment, it is desirable to distinguish through which conveyance lane 20 the sample identifier 210 of the container 200 has been conveyed.

This is because the risk of sample mix-up can be further reduced by determining which conveyance lane 20 each container 200 is in which each read sample identifier 210 is located.

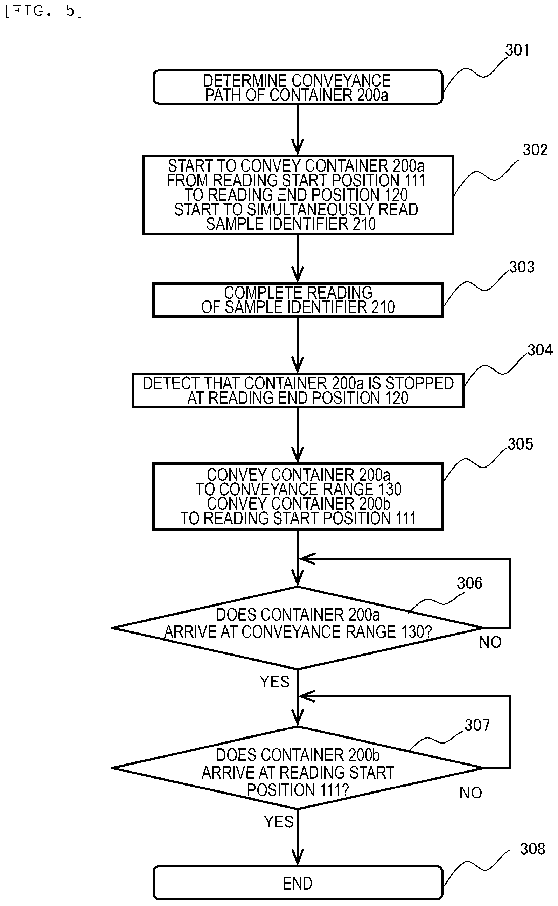

Therefore, when the containers 200 are alternately conveyed by the conveyance lanes 20, it is desirable to determine which conveyance lane 20 the container is read in, by performing reading by a reading method in a flow of FIG. 5 described below.

However, in the method of alternately reading each of the conveyance lanes 20a, 20b, and 20c, there is room for improving the reading processing capability. In order to solve the problem, it is preferable to determine, by using the data acquired by the information reading unit 10, in which conveyance lane, among the conveyance lane 20a, the conveyance lane 20b, and the conveyance lane 20c of the conveyance unit 21, the read sample identifier 210 has been read.

Therefore, it is desirable that the system control unit 6 determines, based on the range in which the sample identifier 210 is read in the data acquired by the information reading unit 10, the conveyance lanes 20, 20a, 20b, and 20c through which the corresponding container 200 is being conveyed.

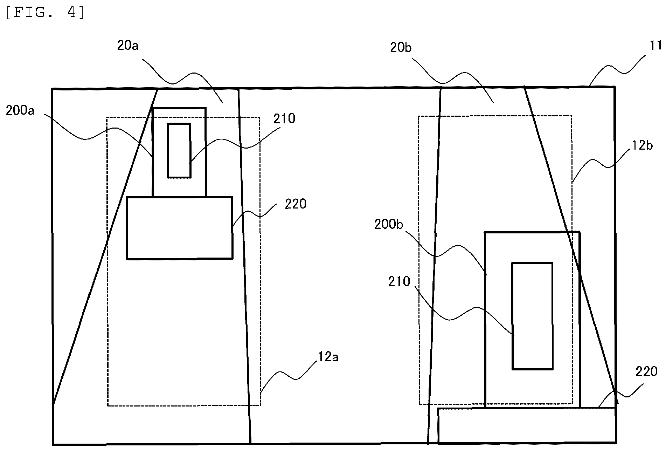

For example, a case where the sample identifier 210 is a bar code and the information reading unit 10 is an image recognition bar code reader will be described using an image 11 captured by the information reading unit 10 shown in FIG. 4. FIG. 2 illustrates the case where reading in three conveyance lanes 20 is performed by the information reading unit 10, and FIG. 4 illustrates a case where two conveyance lanes 20 are shown in the image 11.

As shown in FIG. 4, detection ranges 12a and 12b are set such that sample identifiers 210 of containers 200a and 200b in the reading ranges 110 of the conveyance lanes 20a and 20b are included without omission.

When two or more conveyance lanes 20 are to be shown in the image 11, two or more conveyance lanes 20 may be shown in the image 11.

By setting the detection range, the sample identifier 210 of the container 200 and the conveyance lane 20 can be associated with each other. Namely, when a range in which the sample identifier 210 is recognized in the captured image 11 is the detection range 12a, the sample identifier 210 corresponds to the container 200a in the conveyance lane 20a, and when the above range is the detection range 12b, the sample identifier 210 corresponds to the container 200b in the conveyance lane 20b. According to the determination of the lane, the sample mix-up can be prevented, which contributes to the improvement in the processing capability.

Next, an operation of the information reading unit 10 when reading a plurality of sample identifiers 210 in the sample conveyance device 2 will be described with reference to FIG. 2.

When simultaneously reading the sample identifiers 210 of the plurality of containers 200 conveyed by the plurality of conveyance lanes 20, a case where the information reading unit 10 reads the sample identifiers 210 for a certain period of time based on an input from a sensor or the like is considered. In this case, there is a possibility that a sample identifier 210 of a container 200 that has entered the reading range is not read in time during the reading operation of the information reading unit 10. In contrast, there is room to further improve a reading success rate by completing the reading in time, and to improve the reading processing capacity as a result.

A case where the conveyance start timings are matched in all the conveyance lanes 20 is considered. In this case, a container 200 that has arrived at a reading start position 111 earlier is required to wait for another container 200 to arrive at a reading start position 111 of another conveyance lane 20, and there is room for improvement in reading processing capability.

Therefore, it is desirable that the information reading unit 10 constantly reads the sample identifiers 210 and reads the sample identifiers 210 of the containers 200 conveyed at different timings in the plurality of conveyance lanes 20, 20a, 20b, and 20c.

Accordingly, the sample identifiers 210 can be read even when the containers 200 are conveyed at different timings in the plurality of conveyance lanes 20, and therefore, it is desirable to contribute to the improvement in the processing capability.

As in the present embodiment, when the information reading unit 10 is placed in the conveyance direction and the plurality of containers 200 are present in the reading range 110 within the field of view of the information reading unit 10, it is assumed that a plurality of sample identifiers 210 are read in one conveyance lane 20. In this case, it is not possible to determine which container 200 the read sample identifier 210 is attached to, and therefore, there are some cases that lead to the sample mix-up.

Next, control for further preventing occurrence of a situation of erroneous reading of sample information will be described. In order to further prevent erroneous reading of the sample information, it is desirable to provide only one container 200 in the reading range 110 of each conveyance lane 20.

An operation flow at the time of reading the sample identifier 210 for solving the problem will be described with reference to FIGS. 2 and 5. FIG. 5 shows a flow from determination of a conveyance path of the container 200 to movement to be out of the reading range.

First, in order to read the sample identifier 210 of the container 200a, the system control unit 6 determines the conveyance path based on the reading start position 111 and the reading end position 120 in each conveyance lane 20 (step 301).

FIG. 2 shows a case where the reading start position 111 and the reading end position 120 are fixed in the plurality of conveyance lanes 20, and the conveyance path including the reading start position 111 and the reading end position 120 may be determined based on a required conveyance distance.

Next, the conveyance of the container 200a from the reading start position 111 to the reading end position 120 is started (step 302). At this time, the information reading unit 10 simultaneously starts to read the sample identifier 210 (step 302).

While the container 200 is being conveyed from the reading start position 111 to the reading end position 120, the reading of the sample identifier 210 performed by the information reading unit 10 is completed (step 303).

Thereafter, the sensor detects that the container 200a stops at the reading end position 120 and arrives at the reading end position 120 (step 304).

After the detection, the container 200a is conveyed to the conveyance range 130, and the container 200b to be read next is conveyed to the reading start position 111 (step 305).

Next, the system control unit 6 determines whether the container 200a has been conveyed to the conveyance range 130, that is, whether the container 200a is not present at the reading end position 120 and the container 200b can be conveyed toward the reading end position 120 (step 306). When it is determined that the container 200b can be conveyed to the reading end position 120, the process proceeds to step **307.** When it is determined that the container 200b cannot be conveyed to the reading end position 120, the process is repeated until the condition is satisfied.

Next, the system control unit 6 determines whether the container 200b has arrived at the reading start position 111 (step 307). When it is determined that the container 200b has arrived at the reading start position 111, the process proceeds to step 308. When it is determined that the container 200b has not arrived at the reading start position 111, the process is repeated until the condition is satisfied.

The above steps 306 and 307 are performed to confirm whether the post-conveyance container 200b can be conveyed to the reading range 110, and when the confirmation is completed, the process is ended (step 308).

Subsequently, the sample identifier 210 is read from the container 200b according to the flow shown in FIG. **5****.**

With the process, the containers 200 can be conveyed one by one within the reading range 110 of each conveyance lane 20, and therefore, the sample mix-up in each conveyance lane 20 can be prevented.

Next, effects of the present embodiment will be described.

The sample conveyance device 2 according to Embodiment 1 of the invention described above includes the holder 220 that holds the container 200 to which the sample identifier 210 is attached, the conveyance unit 21 that includes the plurality of conveyance lanes 20, 20a, 20b, and 20c disposed in parallel and conveys the holder 220, and the information reading unit 10 that is disposed in at least one of the front side of the holder 220 in the conveyance direction, the opposite side of the holder 220 in the conveyance direction, and the upper side of the conveyance lanes 20, 20a, 20b, and 20c and reads the sample identifier 210 of the container 200 present in the reading range 110 set in the conveyance unit 21. Regarding the information reading unit 10, one information reading unit 10 reads the sample identifier 210 of the container 200 conveyed in any one of the plurality of conveyance lanes 20, 20a, 20b, and 20c.

Accordingly, the sample identifiers 210 in the plurality of conveyance lanes 20 can be read by one information reading unit 10, erroneous reading can be prevented, and the conveyance processing capability can be improved. The invention is very suitable for a sample analysis system for analyzing a biological sample such as blood or urine, and a sample pretreatment system for performing pretreatment such as centrifugation or aliquoting on a sample.

The sample conveyance device 2 further includes the reading prevention unit that prevents reading of the sample identifier 210 of the container 200 as a next reading target by the information reading unit 10, and therefore, erroneous reading of the sample identifier 210 is further prevented, and the processing capability is simultaneously improved.

The information reading unit 10 constantly reads the sample identifier 210 and reads the sample identifiers 210 of the containers 200 conveyed at different timings in the plurality of conveyance lanes 20, 20a, 20b, and 20c, so that the conveyance efficiency can be improved.

The conveyance efficiency can be improved by further including the system control unit 6 that determines, based on the range in which the sample identifier 210 is read in the data acquired by the information reading unit 10, the conveyance lanes 20, 20a, 20b, and 20c in which the corresponding container 200 is conveyed, or the system control unit 6 that conveys the next container 200 to the reading range 110 after the container 200 as a reading target is conveyed from the reading range 110.

In Embodiment 1, the opening and closing doors 30a, 30b, and 30c are disposed in the conveyance lanes 20a, 20b, and 20c, respectively. Alternatively, one opening and closing door can be disposed for a plurality of conveyance lanes 20.

In Embodiment 1, an example in which the information reading unit 10 is disposed downstream side in the conveyance direction has been described. Alternatively, the information reading unit 10 may be disposed upstream side in the conveyance direction (opposite side in the conveyance direction). In this case, the reading prevention unit for the sample identifier 210 of the container 200 after reading the sample identifier 210 can also be provided. Accordingly, erroneous reading of the sample identifier 210 can be prevented.

Regarding the position where the information reading unit 10 is disposed, the information reading unit 10 may be disposed above the conveyance lanes 20, 20a, 20b, and 20c other than the front side of the holder 220 in the conveyance direction and the opposite side of the holder 220 in the conveyance direction. When the information reading unit 10 is disposed above the conveyance lanes 20, 20a, 20b, and 20c in this manner, information on a sample identifier provided on a lid of the container 200 is preferably read.

In this case, it is possible to provide the reading prevention unit for the sample identifier 210 of the post-conveyance container 200 and the reading prevention unit for the sample identifier 210 of the container 200 after reading the sample identifier 210. Accordingly, erroneous reading of the sample identifier 210 can be prevented.

In the present embodiment, a case where there are a plurality of conveyance lanes 20 has been described as an example, and there is no need to physically provide a plurality of conveyance lanes 20, and the sample identifiers 210 of a plurality of containers 200 conveyed in parallel on a conveyance plane may be similarly read. In other words, one information reading unit can cover a plurality of conveyance paths on a plurality of virtual lanes in the conveyance plane. In this case, the reading control is also enabled, and the conveyance lane 20 of the invention also includes a conveyance path.

The present embodiment has been described using the information reading unit 10 provided in the sample conveyance device 2 as an example. Alternatively, the information reading unit 10 is not limited to being provided in the sample conveyance device 2, and the sample identifier 210 of the present embodiment may also be read by providing the information reading unit 10 in the sample pretreatment system 3, the analysis system connection device 4, and the sample analysis system 5. The arrangement location is not limited.

### <Embodiment 2>

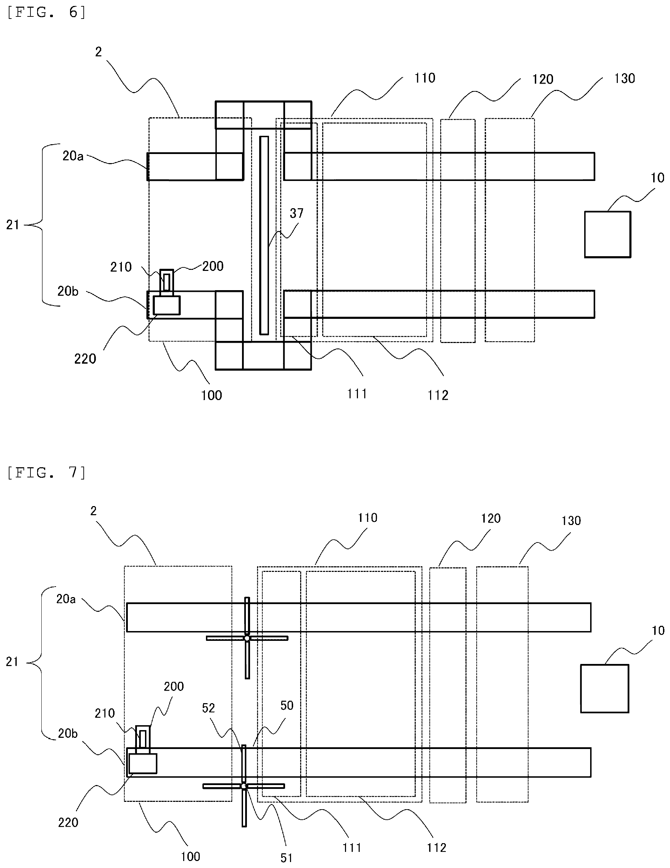

A sample conveyance device and a sample conveyance method according to Embodiment 2 of the invention will be described with reference to FIGS. 6 to 8.

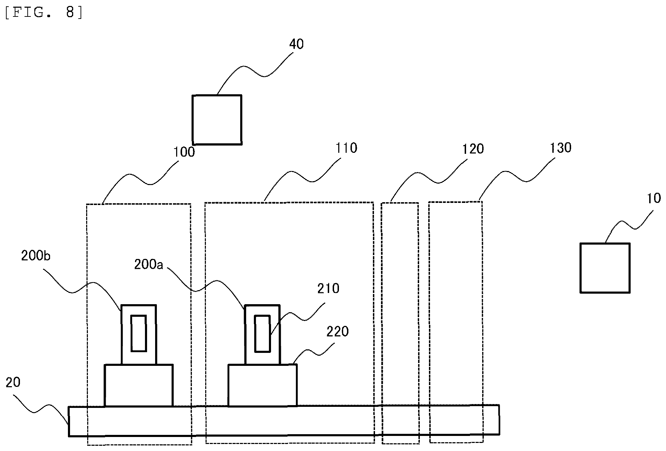

In Embodiment 1, a case where the opening and closing doors 30a, 30b, and 30c are used as the reading prevention units has been described. Alternatively, the wall 37 (see FIG. 6), a rotation door 50 (see FIG. 7), or a light source 40 (FIG. 8) for irradiating the reading range 110 or the reading standby range may be provided instead of the opening and closing door 30.

FIG. 6 is a schematic view showing a case where the wall 37 is provided as the reading prevention unit. In a case where the wall 37 is provided, the container 20 waits in the reading standby range 100 behind the wall 37 until the reading is started, and the container 20 is conveyed to the reading start position 111 so as to avoid the wall 37.

FIG. 7 is a schematic view showing a case where the rotation door 50 is provided as the reading prevention unit. The rotation door 50 includes a rotation shaft 51 and a plurality of door portions 52, and the rotation door 50 is opened and closed by pushing the door portions 52 with a side surface of the holder 220. FIG. 7 shows an example in which the number of the door portions 52 is four, and the number of the door portions 52 may be any number.

FIG. 8 is an illustration diagram showing a schematic configuration of a reading prevention unit when the light source 40 for irradiating the predetermined reading range 110 or reading standby range 100 is provided.

For example, when the sample identifier 210 is a bar code and the information reading unit 10 is an image recognition bar code reader, by providing the light source 40 at a position where the reading range 110 can be irradiated with light, only the sample identifier 210 of the container 200a in the reading range 110 is reflected in the image captured by the information reading unit 10.

On the other hand, the sample identifier 210 of the container 200b in the reading standby range 100 is not irradiated with light and is not reflected in the image captured by the information reading unit 10, and therefore, reading of the sample identifier 210 of the post-conveyance container 200b in the reading standby range 100 can be prevented.

When the light source 40 is disposed at a position where the reading standby range 100 is irradiated with light, the light is radiated with an illuminance of a degree that causes halation on the sample identifier 210 of the container 200b. The sample identifier 210 of the container 200b cannot be recognized in the image captured by the information reading unit 10 due to halation, and therefore, reading of the sample identifier 210 of the post-conveyance container 200b in the reading standby range 100 can be prevented.

One or more of the reading prevention units shown in FIGS. 6 to 8 and FIG. 4 can be used in combination.

Other configurations and operations are substantially the same as those of the sample conveyance device and the sample conveyance method of Embodiment 1 described above, and details thereof are omitted.

In the sample conveyance device and the sample conveyance method according to Embodiment 2 of the invention, substantially the same effects as those of the sample conveyance device and the sample conveyance method according to Embodiment 1 described above can also be obtained.

When the reading prevention unit is one or more of the wall 37 and the rotation door 50 located at the boundary between the reading range 110 and the reading standby range, or the light source 40 that irradiates the reading range 110 or the reading standby range, it is also possible to prevent erroneous reading of the sample identifier 210 and simultaneously contribute to the improvement in the processing capability.

### <Embodiment 3>

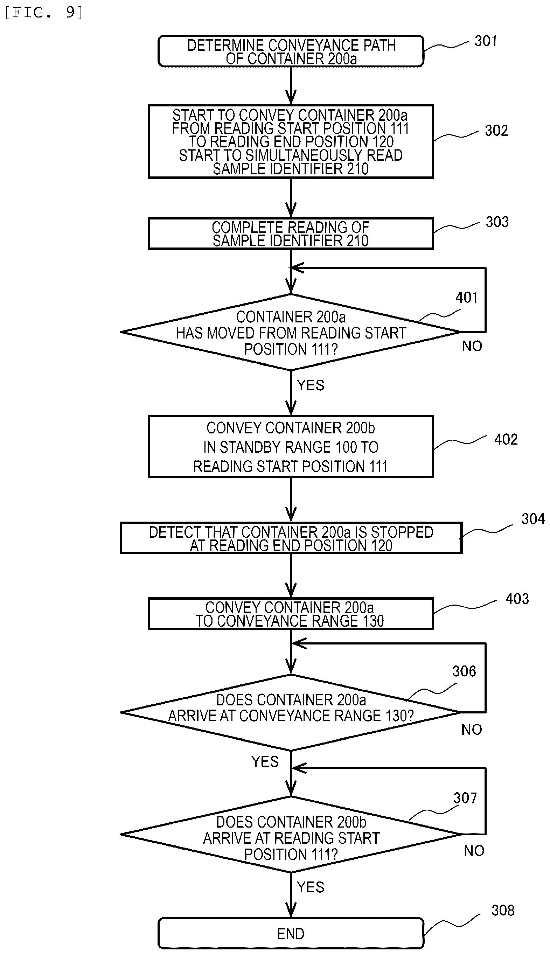

A sample conveyance device and a sample conveyance method according to Embodiment 3 of the invention will be described with reference to FIG. **9****.**

In the present embodiment, when the reading of the sample identifier 210 of the container 200 as a reading target is completed and the container 200 is not at the reading start position, the system control unit 6 conveys the post-conveyance container 200 to the reading start position.

The flow from the determination of the conveyance path of the container 200 to the movement out of the reading range may be executed as follows. FIGS. 2 and 9 are used for the description.

In the flow of the present embodiment, in addition to the flow of FIG. 5, the conveyance time of the post-conveyance container 200 to the reading start position 111 is shortened. Steps 301 to 304 and 306 to 308 are the same as those in FIG. 5.

In FIG. 9, when the reading of the sample identifier 210 of the container 200a is completed (step 303), it means that the sample identifier 210 directly faces the information reading unit 10. In this case, the sample identifier 210 of the container 200a is read, and therefore, it can be said that the conveyance time in the reading conveyance range 112 remains as room for reduction. Therefore, the post-conveyance container 200b is conveyed to the reading start position during the conveyance of the container 200a to improve the processing capability.

At this time, although there are two containers in the reading range 110, the reading of the sample identifier 210 of the container 200a is completed, and therefore, erroneous reading of the sample identifier 210 does not occur by performing the process of invalidating the re-reading of the sample information on the container 200a side which has been read. Then, it is confirmed whether the container 200a is moved from the reading start position 111 and is in the reading conveyance range 112, that is, whether the container 200a is in a state of being able to be conveyed to the reading start position 111 (step 401).

When it is determined that the conveyance to the reading start position 111 is enabled, the process proceeds to step 308. When it is determined that the conveyance to the reading start position 111 is not enabled, the process is repeated until the condition is satisfied.

Thereafter, the post-conveyance container 200b is conveyed from the reading standby range 100 to the reading start position 111 (step 402), and after the container 200a is detected at the reading end position 120, the container 200a is conveyed to the conveyance range 130 (step 403).

Other configurations and operations are substantially the same as those of the sample conveyance device and the sample conveyance method of Embodiment 1 described above, and details thereof are omitted.

In the sample conveyance device and the sample conveyance method according to Embodiment 3 of the invention, substantially the same effects as those of the sample conveyance device and the sample conveyance method according to Embodiment 1 described above can also be obtained.

By further providing the system control unit 6 that controls the conveyance of the holder 220 and the operation of the information reading unit 10, and conveys the post-conveyance container 200 to the reading start position when the reading of the sample identifier 210 of the container 200 as a reading target is completed and the container 200 is not at the reading start position, it is possible to shorten the time for moving the container 200b from the reading standby range 100 to the reading start position 111 after the reading of the sample identifier 210 of the container 200a is completed. Therefore, the conveyance processing capability can be further improved.

In Embodiment 3, at least one of the reading prevention unit shown in FIG. 4 of Embodiment 1 and the reading prevention units shown in FIGS. 6 to 8 of Embodiment 2 can be applied.

### <Others>

The invention is not limited to the above-described embodiments, and includes various modifications. The above-described embodiments have been described in detail to facilitate understanding of the invention, and the invention is not necessarily limited to those including all the configurations described above.

A part of a configuration in one embodiment can be replaced with a configuration in another embodiment, and a configuration in one embodiment can also be added to a configuration in another embodiment. A part of a configuration in each embodiment may also be added to, deleted from, or replaced with another configuration.

### Reference Signs List

1: sample testing automation system
2: sample conveyance device
3: sample pretreatment system
4: analysis system connection device
5: sample analysis system
6: system control unit
10: information reading unit
11: one example of image captured by information reading unit
12a, 12b: detection range of sample identifier
20, 20a, 20b, 20c: conveyance lane
21: conveyance unit
30: opening and closing door (reading prevention unit)
31: claw feeding mechanism
32: opening and closing range of opening and closing door
33: base
34: claw
35: spring-wound rotation shaft
36: stopper
37: wall (reading prevention unit)
40: light source (reading prevention unit)
50: rotation door (reading prevention unit)
51: rotation shaft
52: door portion
100: reading standby range
110: reading range
111: reading start position
112: reading conveyance range
120: reading end position
130: conveyance range
200, 200a, 200b, and 200c: container
210: sample identifier
220: holder
301: conveyance path calculation process
302: process of conveyance from reading start position and process to start reading of sample identifier
303: process of completing reading of sample identifier
304: detection process at reading start position
305: conveyance process from reading standby range
306: detection process in conveyance range
307: detection process at reading start position
308: end process
401: detection process at reading start position
402: process of conveyance from reading standby range
403: process of conveyance from reading end position

## Claims

1. [Amended]
A sample conveyance device (2) comprising:
a holder (220) configured to hold a container (200) to which a sample identifier (210) is attached;
a conveyance unit (21) including a plurality of conveyance lanes (20) disposed in parallel and configured to convey the holder;
an information reading unit (10) disposed in at least one location of a front side of the holder in a conveyance direction, an opposite side of the holder in the conveyance direction, and an upper side of the conveyance lane, and configured to read the sample identifier (210) of the container (200) present in a reading range (110) set in the conveyance unit; and
a control unit (6) configured to control conveyance of the holder and an operation of the information reading unit, wherein
the information reading unit (10) with a quantity of one, reads the sample identifier (210) of the container (200) conveyed through any one of the plurality of conveyance lanes (20), and
**characterized in that**
the control unit (6) determines, based on a range in which the sample identifier is read in data acquired by the information reading unit, the conveyance lane (20) through which the corresponding container (200) is being conveyed.

2. The sample conveyance device according to claim 1, further comprising:
a reading prevention unit (30, 37, 40, 50) configured to prevent the information reading unit from reading the sample identifier of the container as a next reading target.

3. The sample conveyance device according to claim 2, wherein
the reading prevention unit is any one or more of an opening and closing door, a wall, and a rotation door located at a boundary between the reading range and a reading standby range.

4. The sample conveyance device according to claim 2, wherein
the reading prevention unit is a light source configured to irradiate the reading range or a reading standby range.

5. The sample conveyance device according to claim 1, wherein
the information reading unit constantly reads the sample identifier and reads the sample identifiers of the containers conveyed at different timings in the plurality of conveyance lanes.

6. The sample conveyance device according to claim 1, wherein
the control unit conveys a next one of the containers to the reading range after the container as a reading target is conveyed from the reading range.

7. [Amended] The sample conveyance device according to claim 1, wherein
the control unit conveys a post-conveyance one of the containers to a reading start position when reading of the sample identifier of the container as a reading target is completed and the container is not at the reading start position.

8. [Amended] A sample conveyance method performed by a sample conveyance device including a holder (220) configured to hold a container (200) to which a sample identifier (210) is attached, a conveyance unit (21) configured to convey the holder, and an information reading unit (10) configured to read the sample identifier of the container, the method comprising:
providing a plurality of conveyance lanes disposed in parallel in the conveyance unit;
providing the information reading unit in at least one location of a front side of the holder in a conveyance direction, an opposite side of the holder in the conveyance direction, and an upper side of the conveyance lane, and reading, by the information reading unit, the sample identifier of the container present in a reading range set in the conveyance unit;
reading, by the information reading unit with a quantity of one, the sample identifier of the container conveyed in any one of the plurality of conveyance lanes; and
determining, based on a range in which the sample identifier is read in data acquired by the information reading unit, the conveyance lane in which the corresponding container is being conveyed.

## Patentansprüche

1. Probenfördervorrichtung (2), umfassend:
einen Halter (220), der dazu eingerichtet ist, einen Behälter (200) zu halten, an dem ein Probenidentifikationsmittel (210) angebracht ist;
eine Fördereinheit (21), mehrere parallel angeordnete Förderspuren (20) enthält und dazu eingerichtet ist, den Halter zu fördern;
eine Informationsleseeinheit (10), die an einer Stelle einer Vorderseite des Halters in einer Förderrichtung, einer gegenüberliegenden Seite des Halters in der Förderrichtung und/oder einer Oberseite der Förderspur angeordnet und dazu eingerichtet ist, das Probenidentifikationsmittel (210) des Behälters (200) zu lesen, der sich in einem in der Fördereinheit eingestellten Lesebereich (110) befindet; und
eine Steuereinheit (6), die dazu eingerichtet ist, die Förderung des Halters und einen Betrieb der Informationsleseeinheit zu steuern,
wobei die Informationsleseeinheit (10) in einer Anzahl von einer das Probenidentifikationsmittel (210) des Behälters (200) liest, der durch irgendeine der mehreren Förderspuren (20) gefördert wird, und
**gekennzeichnet dadurch, dass** die Steuereinheit (6) basierend auf einem Bereich, in dem das Probenidentifikationsmittel in von der Informationsleseeinheit erfassten Daten gelesen wird, die Förderspur (20) bestimmt, durch die der entsprechende Behälter (200) gefördert wird.

2. Probenfördervorrichtung nach Anspruch 1, ferner umfassend:
eine Leseverhinderungseinheit (30, 37, 40, 50), die dazu eingerichtet ist zu verhindern, dass die Informationsleseeinheit das Probenidentifikationsmittel des Behälters als ein nächstes Leseziel liest.

3. Probenfördervorrichtung nach Anspruch 2, wobei
die Leseverhinderungseinheit eine sich öffnende und schließende Tür, eine Wand und/oder eine Drehtür ist, die an einer Grenze zwischen dem Lesebereich und einem Lesebereitschaftsbereich angeordnet sind.

4. Probenfördervorrichtung nach Anspruch 2, wobei
die Leseverhinderungseinheit eine Lichtquelle ist, die dazu eingerichtet ist, den Lesebereich oder einen Lesebereitschaftsbereich zu bestrahlen.

5. Probenfördervorrichtung nach Anspruch 1, wobei
die Informationsleseeinheit das Probenidentifikationsmittel kontinuierlich liest und die Probenidentifikationsmittel der Behälter liest, die zu verschiedenen Zeitpunkten in den mehreren Förderspuren gefördert werden.

6. Probenfördervorrichtung nach Anspruch 1, wobei
die Steuereinheit einen nächsten der Behälter zu dem Lesebereich fördert, nachdem der Behälter als Leseziel aus dem Lesebereich gefördert wurde.

7. Probenfördervorrichtung nach Anspruch 1, wobei
die Steuereinheit einen förderungsnachfolgenden der Behälter zu einer Lesestartposition fördert, wenn das Lesen des Probenidentifikationsmittels des Behälters als Leseziel abgeschlossen ist und sich der Behälter nicht an der Lesestartposition befindet.

8. Probenförderverfahren, das von einer Probenfördervorrichtung durchgeführt wird, die einen Halter (220), der dazu eingerichtet ist, einen Behälter (200) zu halten, an dem ein Probenidentifikationsmittel (210) angebracht ist, eine Fördereinheit (21), die dazu eingerichtet ist, den Halter zu fördern, und eine Informationsleseeinheit (10), die dazu eingerichtet ist, das Probenidentifikationsmittel des Behälters zu lesen, enthält, wobei das Verfahren umfasst:
Bereitstellen mehrerer parallel angeordneter Förderspuren in der Fördereinheit;
Bereitstellen der Informationsleseeinheit an einer Stelle einer Vorderseite des Halters in einer Förderrichtung, einer gegenüberliegenden Seite des Halters in der Förderrichtung und/oder einer Oberseite der Förderspur, und Lesen, durch die Informationsleseeinheit, des Probenidentifikationsmittels des Behälters, der sich in einem in der Fördereinheit eingestellten Lesebereich befindet;
Lesen, durch die Informationsleseeinheit in einer Anzahl von einer, des Probenidentifikationsmittels des Behälters, der in irgendeiner der mehreren Förderspuren gefördert wird; und
Bestimmen, basierend auf einem Bereich, in dem das Probenidentifikationsmittel in von der Informationsleseeinheit erfassten Daten gelesen wird, der Förderspur, in der der entsprechende Behälter gefördert wird.

## Revendications

1. Dispositif (2) de transport d'échantillon comprenant :
un support (220) configuré pour supporter un récipient (200) sur lequel un identifiant (210) d'échantillon est fixé ;
une unité (21) de transport incluant une pluralité de voies (20) de transport disposées en parallèle et configurées pour transporter le support ;
une unité (10) de lecture d'informations disposée en au moins un emplacement d'un côté avant du support dans un sens de transport, d'un côté opposé du support dans le sens de transport, et d'un côté supérieur de la voie de transport, et configurée pour lire l'identifiant (210) d'échantillon du récipient (200) présent dans une plage (110) de lecture définie dans l'unité de transport ; et
une unité (6) de commande configurée pour commander un transport du support et une opération de l'unité de lecture d'informations, dans lequel
l'unité (10) de lecture d'informations, avec une quantité de un, lit l'identifiant (210) d'échantillon du récipient (200) transporté par l'une quelconque de la pluralité de voies (20) de transport, et
**caractérisé en ce que**
l'unité (6) de commande détermine, sur la base d'une plage dans laquelle l'identifiant d'échantillon est lu dans des données acquises par l'unité de lecture d'informations, la voie (20) de transport par laquelle le récipient (200) correspondant est transporté.

2. Dispositif de transport d'échantillon selon la revendication 1, comprenant en outre :
une unité (30, 37, 40, 50) de prévention de lecture pour empêcher que l'unité de lecture d'informations ne lise l'identifiant d'échantillon du récipient comme une cible suivante de lecture.

3. Dispositif de transport d'échantillon selon la revendication 2, dans lequel
l'unité de prévention de lecture est l'une quelconque ou plus parmi une porte ouvrante et fermante, une paroi, et une porte tournante située à une limite entre la plage de lecture et une plage d'attente de lecture.

4. Dispositif de transport d'échantillon selon la revendication 2, dans lequel
l'unité de prévention de lecture est une source de lumière configuré pour irradier la plage de lecture ou une plage d'attente de lecture.

5. Dispositif de transport d'échantillon selon la revendication 1, dans lequel
l'unité de lecture d'informations lit en continu l'identifiant d'échantillon et lit les identifiants d'échantillon des récipients transportés à différents moments dans la pluralité de voies de transport.

6. Dispositif de transport d'échantillon selon la revendication 1, dans lequel
l'unité de commande transporte un suivant parmi les récipients jusqu'à la plage de lecture après que le récipient comme une cible de lecture a été transporté depuis la plage de lecture.

7. Dispositif de transport d'échantillon selon la revendication 1, dans lequel
l'unité de commande transporte un en post-transport parmi les récipients jusqu'à une position de démarrage de lecture lorsqu'une lecture de l'identifiant d'échantillon du récipient comme une cible de lecture est terminée et que le récipient n'est pas à la position de démarrage de lecture.

8. Procédé de transport d'échantillon mis en œuvre par un dispositif de transport d'échantillon incluant un support (220) configuré pour supporter un récipient (200) sur lequel un identifiant (210) d'échantillon est fixé, une unité (21) de transport configurée pour transporter le support, et une unité (10) de lecture d'informations configurée pour lire l'identifiant d'échantillon du récipient, le procédé comprenant :
la prévision d'une pluralité de voies de transport disposées en parallèle dans l'unité de transport ;
la prévision d'une unité de lecture d'informations en au moins un emplacement d'un côté avant du support dans un sens de transport, d'un côté opposé du support dans le sens de transport, et d'un côté supérieur de la voie de transport, et la lecture, par l'unité de lecture d'informations, de l'identifiant d'échantillon du récipient présent dans une plage de lecture définie dans l'unité de transport ;
la lecture, par l'unité de lecture d'informations avec une quantité de un, de l'identifiant d'échantillon du récipient transporté dans l'une quelconque de la pluralité de voies de transport ; et
la détermination, sur la base d'une plage dans laquelle l'identifiant d'échantillon est lu dans des données acquises par l'unité de lecture d'informations, de la voie de transport dans laquelle le récipient correspondant est transporté.
